(19) **Europäisches Patentamt / European Patent Office / Office européen des brevets**

(11) **EP 2 724 179 B1**

(12) # FASCICULE DE BREVET EUROPEEN

(45) Date de publication et mention de la délivrance du brevet:
**09.09.2015 Bulletin 2015/37**

(21) Numéro de dépôt: **12738532.6**

(22) Date de dépôt: **27.06.2012**

(51) Int Cl.:
**G01S 19/11** (2010.01)   **G01S 19/21** (2010.01)
**G01S 5/14** (2006.01)

(86) Numéro de dépôt international:
**PCT/FR2012/051472**

(87) Numéro de publication internationale:
**WO 2013/001231 (03.01.2013 Gazette 2013/01)**

(54) **OPTIMISATION D'UN SYSTEME DE LOCALISATION COMPRENANT DES STATIONS DE BASE EMETTRICES TERRESTRES**

OPTIMIERUNG EINES ORTUNGSSYSTEMS MIT TERRESTRISCHEN SENDEBASISSTATIONEN

OPTIMIZATION OF A LOCATION SYSTEM INCLUDING TERRESTRIAL TRANSMITTING BASE STATIONS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **27.06.2011  FR 1155702**

(43) Date de publication de la demande:
**30.04.2014  Bulletin 2014/18**

(73) Titulaire: **Centre National d'Etudes Spatiales (CNES)**
**75001 Paris (FR)**

(72) Inventeur: **BOYER, Marc**
**F-31490 Leguevin (FR)**

(74) Mandataire: **Hervouet, Sylvie et al**
**Ipsilon Feray Lenne Conseil**
**Le Centralis**
**63 avenue du General Leclerc**
**92340 Bourg-la-Reine (FR)**

(56) Documents cités:
- **VERVISCH-PICOIS A ET AL: "Interference Mitigation in a Repeater and Pseudolite Indoor Positioning System", IEEE JOURNAL OF SELECTED TOPICS IN SIGNAL PROCESSING, IEEE, US, vol. 3, no. 5, 1 octobre 2009 (2009-10-01) , pages 810-820, XP011278687, ISSN: 1932-4553, DOI: 10.1109/JSTSP. 2009.2027805**

- **SUNG-HYUCK IM ET AL: "An Indoor Positioning System Using Time-Delayed GPS Repeater", ION GNSS 19TH INTERNATIONAL TECHNICAL MEETING OF THE SATELLITE DIVISION, FORT WORTH TX, 26 septembre 2006 (2006-09-26), pages 2478-2483, XP002619717,**
- **SUNG-HYUCK IM ET AL: "Feasibility Study of Pseudolite Techniques Using Signal Transmission Delay and Code Offset", ION GNSS. INTERNATIONAL TECHNICAL MEETING OF THE SATELLITEDIVISION OF THE INSTITUTE OF NAVIGATION, WASHINGTON, DC, US, 26 janvier 2009 (2009-01-26), pages 798-803, XP002619718,**
- **ALEXANDRE VERVISCH-PICOIS ET AL: "Current status of the repealite based approach: A sub-meter indoor positioning system", SATELLITE NAVIGATION TECHNOLOGIES AND EUROPEAN WORKSHOP ON GNSS SIGNALS AND SIGNAL PROCESSING (NAVITEC), 2010 5TH ESA WORKSHOP ON, IEEE, 8 décembre 2010 (2010-12-08), pages 1-6, XP031898863, DOI: 10.1109/NAVITEC.2010.5707994 ISBN: 978-1-4244-8740-0**

**Description**

La présente invention concerne l'optimisation d'un système de localisation par signaux de type CDMA, notamment de type satellite, comprenant une pluralité de stations de base terrestres, appelées stations de base pseudolites, aptes à être installées dans un environnement prédéterminé.

Un tel système a été développé par la Société Demanderesse, notamment dans le but de couvrir des espaces intérieurs (centre commerciaux, aéroports, salons, parking...) pour lesquels il n'est pas toujours possible de capter les signaux de navigation en provenance des satellites. Le principe consiste à installer des stations de bases terrestres dans l'espace à couvrir, ces stations de bases étant appelées pseudolites (pour « pseudo-satellites ») car elles reproduisent les signaux de navigation traditionnellement transmis par les satellites des systèmes de navigation. Tout récepteur GPS classique, tel que ceux équipant les Smartphones, peut alors afficher sa position sur l'écran du récepteur sur une carte interactive téléchargée avec une application.

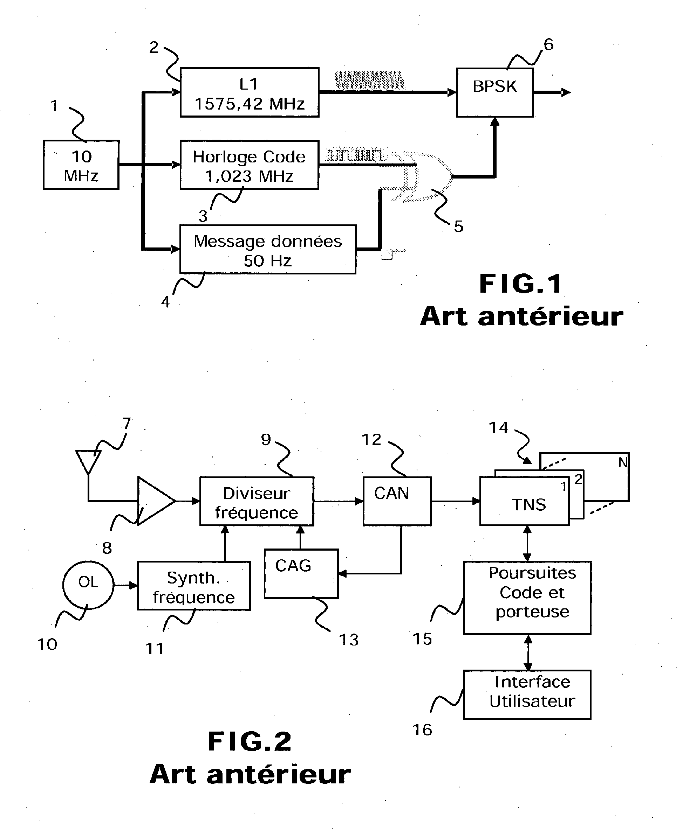

L'architecture classique d'un émetteur d'une station de base pseudolite est rappelée sur la figure 1, dans le cas non limitatif de l'émission de signaux GPS :

On rappelle que le service de positionnement standard ou SPS est à la disposition de tous les utilisateurs de GPS du monde entier et ce, sans aucune charge directe. Les signaux du SPS à usage civil sont des signaux codés par un code dit C/A (initiales anglo-saxonnes mises pour Coarse/Acquisition) et diffusés sur une fréquence porteuse L1 (1575,42 MHz). Le code C/A consiste en une suite pseudo-aléatoire de 1023 bits avec une horloge de 1,023MHz. Il est ainsi répété chaque milliseconde. Optionnellement, avant de moduler la fréquence porteuse L1, le code C/A peut lui-même être module par un message de navigation de 50 bits/s, incluant notamment l'heure d'émission du signal, des termes correctifs et les données de position des satellites. Sa petite taille permet au récepteur GPS de capter rapidement les informations satellites. Chaque station de base possède son propre code pseudo-aléatoire connu sous la dénomination anglo-saxonne de "Gold code". Ce code a été étudié pour minimiser les probabilités de confondre deux signaux différents émis par des stations de bases différentes sur la même fréquence et permettre la mesure d'un temps de propagation.

Ainsi, un émetteur de station de base pseudolite comprend essentiellement un oscillateur local 1 pour générer une fréquence de 10 MHz, à partir de laquelle vont pouvoir être dérivées les différentes fréquences utiles à la génération, par les générateurs correspondant 2, 3 et 4, du signal à la fréquence porteuse L1, du code C/A, et du message de navigation. La modulation du code C/A par le message de navigation est représentée ici par des moyens logiques 5 réalisant une fonction « OU exclusif » du code C/A et du message de navigation. Un modulateur 6 de type BPSK, consistant à augmenter la phase de 180° à chaque changement de parité du code C/A, est utilisé pour obtenir le signal final émis par là station de base.

La figure 2 représente schématiquement un récepteur multicanaux classique :

Le signal reçu sur une antenne radiofréquence 7 résulte de la combinaison de tous les signaux émis depuis les stations de base pseudotites environnantes. Le signal reçu est tout d'abord amplifié par un amplificateur 8 de façon à diminuer le bruit thermique du récepteur. La fréquence des signaux amplifiés est ensuite abaissée à une fréquence dite intermédiaire à l'aide d'un diviseur de fréquence 9 recevant un signal de fréquence prédéfinie à partir d'un oscillateur local 10 et d'un synthétiseur de fréquence 11. Le signal à fréquence intermédiaire est ensuite numérisé, de préférence en phase et en quadrature, par un convertisseur analogique-numérique 12. Un contrôle automatique de gain est appliqué à ce niveau par un module 13. En sortie du convertisseur 12, les différents signaux numérisés sont prêts à être traités par chacun des N canaux 14 du récepteur pour l'acquisition des signaux et la poursuite des codes et porteuses. A partir d'au moins quatre signaux acquis, un module 15 va pouvoir extraire une information de positionnement par triangularisation. Un module d'interface utilisateur 16 permet à l'utilisateur de visualiser sa position sur une carte affichée sur un écran.

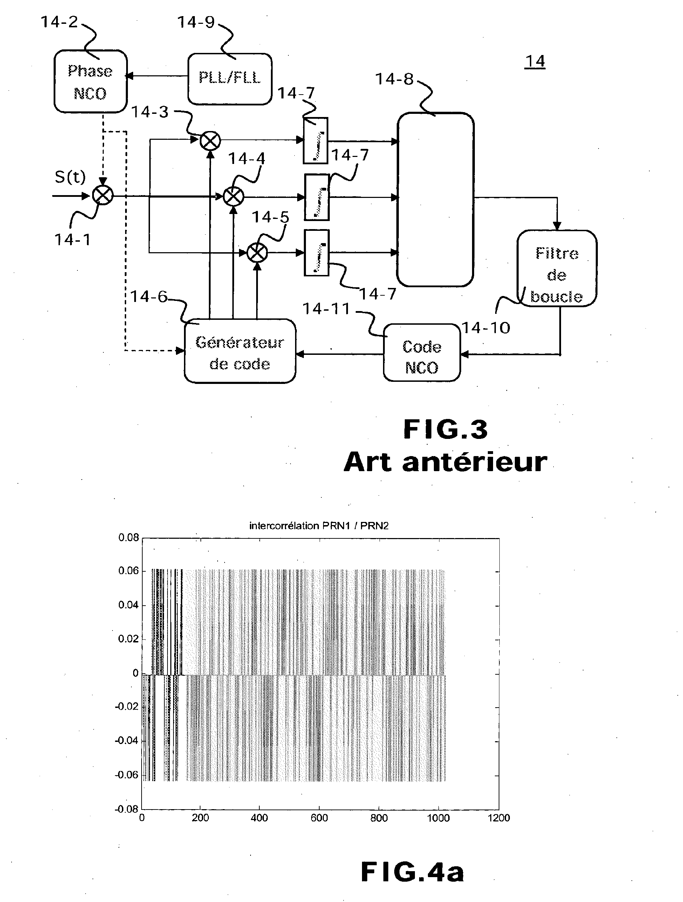

La figure 3 illustre schématiquement le traitement effectué sur chaque canal de réception du récepteur multicanaux de la figure 2. Pour ne pas surcharger la figure, le traitement effectué a été représenté sous forme d'un traitement analogique. Néanmoins, ce traitement est en réalité effectué d'une part, sur les signaux échantillonnés en phase, et d'autre part sur les signaux échantillonnés en quadrature délivrés par le convertisseur analogique-numérique 12 de la figure 2. L'acquisition et la poursuite d'un signal GPS s'effectuent selon deux processus de réplique et de corrélation de porteuses et de codes. Le signal S(t) reçu est tout d'abord corrélé en phase. On supprime la porteuse du signal reçu S(t) grâce à un mélangeur 14-1 recevant d'une part, le signal S(t), et d'autre part, un signal de porteuse prédéterminée issu d'un oscillateur 14-2 contrôlé numériquement. Le signal en sortie du mélangeur 14-1 est ensuite corrélé par trois corrélateurs 14-3, 14-4, 14-5 à trois répliques locales du code C/A correspondant au canal de réception, générées par un générateur de code 14-6, et correspondant respectivement une réplique retardée d'un délai prédéterminé, à une réplique en phase, et à une réplique avancée du même délai prédéterminé. Des intégrateurs 14-7 intègrent les sorties de chaque corrélateurs 14-3, 14-4, 14-5 et fournissent les résultats des intégrations à un discriminateur 14-8. Des décalages successifs sur la réplique du code sont réalisés jusqu'à l'obtention d'une corrélation maximale entre la réplique et, le code reçu. Le canal de réception est alors en mesure, à partir du décalage réalisé, d'estimer la durée de propagation du signal entre la station de base émettrice et le récepteur, et par suite, la pseudo distance séparant le récepteur de cette station de base. Une boucle de poursuite de phase 14-9 est utilisée pour suivre la fréquence porteuse, et une boucle de poursuite de code comportant un filtre de boucle 14-10 et un module 14-11 de cadencement de générateur de code 14-6 est utilisée pour suivre les codes C/A.

Dans tout système de communication radiofréquence utilisant des stations de base terrestres aptes à émettre des signaux selon la technique du codage par étalement de spectre (CDMA, initiales anglo-saxonnes mises pour Code Division Multiple Access), un récepteur mobile peut se retrouver proche d'une station de base A et éloigné d'une station de base B. Dans ce cas, le signal émis par la station de base B devra parcourir une plus grande distance que le signal émis par la station de base A pour parvenir jusqu'au récepteur. Il en résulte une différence de puissance non négligeable entre les signaux reçus par le récepteur. Ce problème, bien connu sous le nom de l'effet champ proche/ champ lointain, peut altérer le traitement du signal à la réception, en particulier au niveau du canal procédant à la réception du signal le plus faible (ici le signal reçu de la station de base B). En effet, même si les codes à étalement de spectre utilisés à l'émission sont choisis pour garantir une intercorrélation minimale (marge d'intercorrélation), la différence de puissance peut être très proche, voire supérieure à cette marge d'intercorrélation. Dans ce cas, l'acquisition du signal sur le canal de réception correspondant au signal le plus faible peut échouer, ou conduire à un faux verrouillage (détection d'un pic d'intercorrélation au lieu d'un pic d'autocorrélation). L'estimation de la position du récepteur peut alors être momentanément impossible si le récepteur ne dispose pas simultanément de suffisamment de signaux acquis, ou erronée dans le cas d'un faux verrouillage.

De plus, même en cas d'acquisition du signal faible, la poursuite de ce signal sera dégradée si l'intercorrélation entre le code correspondant au signal fort et le code local utilisé par le canal de réception correspondant au signal faible est trop élevée.

L'effet champ proche/champ lointain est également connu dans les systèmes de navigation par satellites (GPS ou autre système GNSS). Dans ce cas néanmoins, il ne résulte pas de la différence de temps de propagation entre les signaux émis par deux satellites, mais plutôt de la présence d'obstacles (murs, plafonds, arbres...) qui peuvent venir atténuer fortement le signal reçu de l'un des satellites par rapport à ceux reçus d'autres satellites.

Pour résoudre le problème de l'effet champ proche/champ lointain, il est déjà connu de prévoir, dans certains récepteurs de signaux de type GPS, des traitements particuliers avant que le signal faible ne soit corrélé avec le code local lui correspondant. Ces traitements, connus sous les acronymes anglo-saxons SIC (Successive Interference Cancellation) ou PIC (Parallel Interference Cancellation), consistent à soustraire séquentiellement ou parallèlement, dans les canaux de réception correspondant aux signaux faibles, tous les signaux de forte puissance déjà acquis, avant d'effectuer la corrélation avec le code local. Ainsi, la composante gênante d'intercorrélation se voit éliminée du résultat de la corrélation entre le signal reçu et le code local. On se rapportera notamment au document intitulé "Analysis of a Simple Successive Interference cancellation Scheme in a D/CDMA System", Pulin Patel and Jack Holtzman, IEEE Journal on selected areas in communications, vol; 12, No 5, June 1994 et au brevet américain US 5, 363, 403 pour une description complète de ces techniques.

Ces techniques connues présentent néanmoins un certain nombre d'inconvénients:

La solution SIC augmente la complexité du récepteur compte tenu du pré traitement nécessaire pour pouvoir soustraire les signaux forts acquis au niveau de tous les canaux de réception pour lesquels aucun signal n'a encore été acquis.

La solution PIC requiert quant à elle des corrélateurs additionnels pour pouvoir être en mesure d'estimer les paramètres des signaux forts, avant de pouvoir les soustraire aux signaux plus faibles des autres canaux de réception. De plus, l'estimation est imprécise, de sorte que le traitement sur les faibles signaux reste entaché d'une erreur résiduelle.

Par ailleurs, quelle que soit la méthode utilisée parmi les deux méthodes PIC ou SIC précédentes, il est nécessaire de pouvoir numériser le signal reçu sur plus d'un bit, la suppression des signaux forts étant d'autant meilleure que le nombre de bits est important. L'augmentation du nombre de bits d'un convertisseur analogique-numérique a un impact négatif tant sur le coût que sur la complexité du récepteur. D'ailleurs, la majorité des récepteurs GPS actuellement commercialisés n'a pas la capacité de numériser le signal sur plus d'un bit, de sorte que ces techniques ne sont pas applicables.

La présente invention a pour but de pallier les inconvénients de l'art antérieur en proposant une solution à l'effet champ proche/champ lointain qui traite le problème dès l'émission des signaux, de sorte que tout récepteur multicanaux basique, tel que celui représenté schématiquement aux figures 2 et 3, puisse être utilisé.

Pour ce faire, la présente invention a pour objet un procédé d'optimisation d'un système de localisation comprenant un nombre N supérieur ou égal à 2 de stations de base émettrices terrestres aptes à être installées à des positions prédéterminées de manière à couvrir une zone terrestre de frontières connues pour permettre à tout récepteur CDMA multicanaux mobile dans ladite zone d'extraire sa position à partir de signaux CDMA qu'il reçoit d'une pluralité desdites stations de base terrestres, caractérisé en ce qu'il comporte les étapes suivantes :

- Recherche, pour tout couple de stations de base terrestre i et j de positions prédéterminées respectives $x_i$ et $x_j$, d'une plage de variation restreinte sur laquelle les coefficients d'intercorrélation sur le canal de réception i et sur le canal de réception j du récepteur devront être minimum, à partir d'estimations des différences minimales et maximales entre les temps de propagation des signaux émis par les stations de base terrestre i et j pour l'ensemble des positions possibles du récepteur ;
- Estimation d'une valeur de décalage temporel intentionnel $\delta_{ij}$ à appliquer à l'émission entre un premier code émis par la station de base i et un deuxième code émis par la station de base j, pour lequel l'intercorrélation entre ledit premier code et ledit deuxième code est minimale pour tous les retards compris dans ladite plage de variation restreinte.

L'invention a également pour objet un système de localisation comprenant un nombre N supérieur ou égal à 2 de stations de base émettrices terrestres installées à des positions prédéterminées de manière à couvrir une zone terrestre de frontières connues pour permettre à un récepteur multicanaux mobile dans ladite zone d'extraire sa position à partir de signaux CDMA qu'il reçoit d'une pluralité desdites stations de base terrestres, chaque station de base émettrice comportant un générateur de signal apte à délivrer un signal à une fréquence porteuse prédéfinie codé par un code CDMA propre à chaque station de base, caractérisé en ce que chaque générateur de signal comporte en outre des moyens aptes à appliquer sur le code CDMA correspondant un décalage temporel intentionnel estimé conformément au procédé.

La présente invention sera mieux comprise au vu de la description suivante, faite en référence aux figures annexées, dans lesquelles :

- la figure 1 représente schématiquement un émetteur d'un signal GPS selon l'art antérieur ;
- la figure 2 représente schématiquement l'architecture connue d'un récepteur multicanaux classique de signaux CDMA ;
- la figure 3 illustre une chaîne de traitement classique d'un canal de réception du récepteur de la figure 2 ;
- la figure 4a donne un exemple de la variation du coefficient d'intercorrélation entre deux codes en fonction d'un décalage temporel entre ces deux codes, sur une plage correspondant à la longueur des codes;
- la figure 4b est un grossissement de la figure 4a sur une partie de plage de variation ;
- la figure 5 donne les variations recherchées des coefficients d'autocorrélation et d'intercorrélation sur deux canaux de réception ;
- la figure 6 est une représentation synoptique des étapes possibles pour un procédé d'optimisation selon l'invention ;
- la figure 7 représente une architecture possible d'un système de localisation selon l'invention ;
- la figure 8 illustre schématiquement la génération d'un signal CDMA selon l'invention.

La présente invention tire partie du fait que chaque système d'aide à la localisation utilisant des stations de base terrestres ou pseudolites pour émettre les signaux de type CDMA, est destiné à couvrir une zone terrestre dont les limites ou frontières sont parfaitement connues, et dont l'étendue est restreinte (de l'ordre de quelques dizaines de mètres dans un immeuble, ou de quelques centaines de mètres dans une zone de type zone commerciale ou aéroportuaire). En conséquence, pour ce type de système, la différence maximale entre les temps de propagation pour deux signaux émis par deux stations de base pseudolites du système est en général beaucoup plus faible que la durée des codes émis pas ces stations.

Ainsi, si l'on considère, à titre d'exemple non limitatif, un système utilisant les codes C/A du système GPS, on rappelle que chaque code C/A est composé de 1023 brins (« chips » en terminologie anglo-saxonne), avec une horloge interne de 1,023 MHz. Chaque code C/A a ainsi une durée de 1 milliseconde. Pour atteindre un tel ordre de grandeur sur une différence de temps de propagation entre deux stations de base pseudolites, il faudrait que ces stations de base soient distantes de 300 kilomètres, ce qui n'est jamais le cas dans la réalité.

Ainsi, il n'est pas nécessaire en pratique que l'intercorrélation entre deux codes émis par deux stations de base d'un même système soit faible pour tous les retards de phases possibles (c'est-à-dire compris dans l'intervalle allant de 0 à 1 milliseconde pour le signal C/A). Il suffit que cette intercorrélation soit faible pour tous les retards de phase compris dans une plage temporelle restreinte dépendant des positions des deux stations de base terrestres, et ce, pour toutes les positions possibles d'un récepteur à l'intérieur de la zone couverte par le système. Cette plage temporelle restreinte correspond en pratique à la durée de quelques brins ou chips du code, typiquement de un ou deux brins du code.

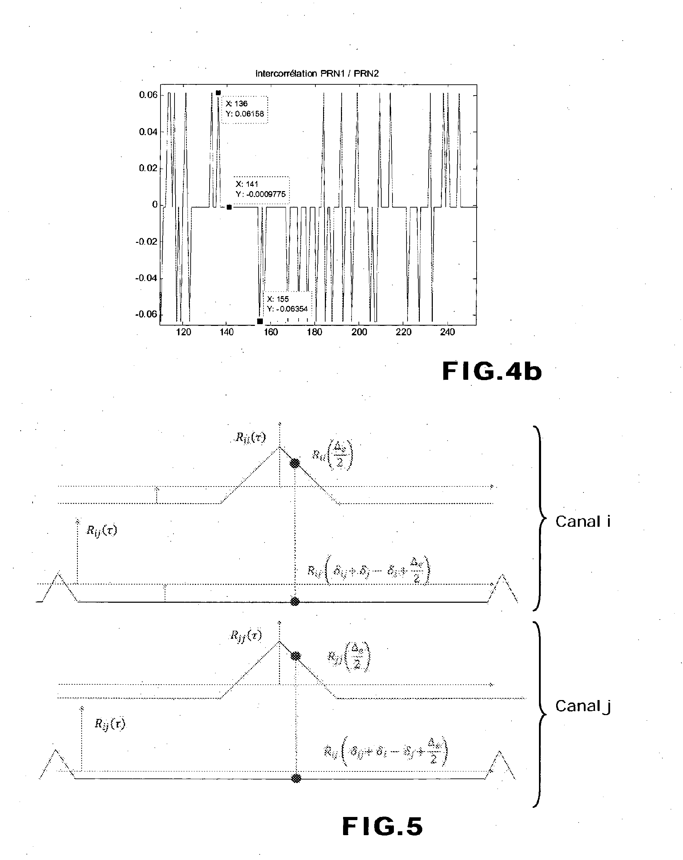

En outre, les codes C/A utilisés par les stations de bases terrestres sont des « gold code » dont la longueur est de 1 milliseconde (pour 1023 brins), et pour lesquels la fonction d'intercorrélation entre deux codes CDMA varie en fonction du retard de phase ou décalage temporel entre ces deux codes. Ceci est illustré par les figures 4a et 4b qui représentent l'intercorrélation obtenue entre deux codes en fonction d'un décalage temporel (en unité de brins) entre les deux codes, variant sur une plage correspondant à toute la durée d'un code (figure 4a) ou sur une partie seulement de cette plage (figure 4b). On note sur ces figures qu'il est possible d'obtenir des valeurs très faibles d'intercorrélation (de l'ordre de -60 dB).

En conséquence, comme on connaît a priori le nombre et les positions des stations de base terrestre que l'on souhaite installer pour couvrir une zone donnée, on peut estimer la plage de variation des décalages temporels entre deux signaux reçus simultanément par un récepteur, quelle que soit le position de ce récepteur. Il est alors possible de traiter dès l'origine le problème de l'effet champ proche/champ lointain en choisissant de décaler intentionnellement les codes à l'émission de façon à garantir des valeurs d'intercorrélation les plus faibles possibles à la réception sur cette plage de variation, quelle que soit la position du récepteur (et par suite quels que soit les retards de propagation liés à la position du récepteur).

Le problème posé peut être exprimé mathématiquement comme suit :

Le signal $S(t)$ reçu par un récepteur sur le canal de réception i correspondant à une station de base pseudolite i, suite à l'émission de deux stations de base pseudolites i et j, peut être exprimé par la relation suivante (après suppression de la porteuse):

$$S(t) = A_i(x, x_i) \times C_i(t + \delta_i(x, x_i)) + A_j(x, x_j) \times C_j(t + \delta_{ij} + \delta_j(x, x_j)),$$

dans laquelle :

- $x$ est la position du récepteur ;
- $x_i$ et $x_j$ correspondent respectivement aux positions des stations de base pseudolites i et j ;
- $A_i(x,x_i)$ et $A_j(x,x_j)$ sont les amplitudes des signaux reçus par le récepteur respectivement des stations de base pseudolites i et j;
- $C_i(t)$ et $C_j(t)$ représentent les codes à étalement de spectre associés respectivement aux stations de base pseudolites i et j ;
- $\delta_i(x,x_i)$ (respectivement $\delta_j(x,x_j)$) correspond au temps de propagation du signal entre la station de base pseudolite i (respectivement j) et le récepteur ;
- $\delta_{ij}$ est le décalage temporel intentionnel que l'on cherche à appliquer, conformément à l'invention, entre le code émis par la station de base pseudolite i et le code émis par la station de base pseudolite j. On supposera ce décalage temporel positif dans la suite par convention.

Dans la relation précédente, on a supposé que les phases de la porteuse des signaux émis par les stations de base pseudolites i et j étaient identiques. Cette hypothèse n'est pas gênante du fait qu'elle correspond aux conditions les plus défavorables en ce qui concerne les valeurs des corrélations.

Dans la suite de l'exposé, on considère que le signal le plus fort vient de la station de base pseudolite j.

Au niveau du canal de réception $i$, les signaux $O_E(t)$ et $O_L(t)$ correspondant respectivement à la corrélation en avance et la corrélation en retard peuvent s'écrire:

$$O_L(t) = \int_0^{\Delta T} S(t) \times C_i\left(t + \delta_i(x, x_i) - \frac{\Delta e}{2}\right) dt$$

$$= \int_0^{\Delta T} A_i(x, x_i) \times C_i(t + \delta_i(x, x_i)) \times C_i\left(t + \delta_i(x, x_i) - \frac{\Delta e}{2}\right) dt$$

$$+ \int_0^{\Delta T} A_j(x, x_j) \times C_j(t + \delta_{ij} + \delta_j(x, x_j)) \times C_i\left(t + \delta_i(x, x_i) - \frac{\Delta e}{2}\right) dt$$

Avec $\dfrac{\Delta e}{2}$ le retard temporel sur la réplique du code, et $\Delta T$ une durée égale à ou multiple de la durée d'un code.

$$\text{Soit } O_L(t) = A_i(x, x_i) \times R_{ii}\left(\frac{\Delta e}{2}\right) + A_j(x, x_j) \times R_{ij}\left(\delta_{ij} + \delta_j(x, x_j) - \delta_i(x, x_i) + \frac{\Delta e}{2}\right)$$

où $R_{ii}$ et $R_{ij}$ correspondent respectivement aux coefficients d'autocorrélation et d'intercorrélation sur le canal i, et

$$O_E(t) = \int_0^{\Delta T} S(t) \times C_i\left(t + \delta_i(x, x_i) + \frac{\Delta e}{2}\right) dt$$

$$= \int_0^{\Delta T} A_i(x, x_i) \times C_i(t + \delta_i(x, x_i)) \times C_i\left(t + \delta_i(x, x_i) + \frac{\Delta e}{2}\right) dt$$

$$+ \int_0^{\Delta T} A_j(x, x_j) \times C_j(t + \delta_{ij} + \delta_j(x, x_j)) \times C_i\left(t + \delta_i(x, x_i) + \frac{\Delta e}{2}\right) dt$$

Soit

$$O_E(t) = A_i(x, x_i) \times R_{ii}\left(-\frac{\Delta e}{2}\right) + A_j(x, x_j) \times R_{ij}\left(\delta_{ij} + \delta_j(x, x_j) - \delta_i(x, x_i) - \frac{\Delta e}{2}\right)$$

Le retard $\tau$ entre le signal le plus fort (code d'indice j) et la réplique locale (code d'indice i) est donc :

$$\tau = \delta_{ij} + \delta_j(x, x_j) - \delta_i(x, x_i) + \varepsilon \frac{\Delta e}{2}$$

avec $\varepsilon = \pm 1$, selon que l'on considère la corrélation en avance ou la corrélation en retard.

Le principe selon la présente invention consiste à rechercher le décalage temporels intentionnel $\delta_{ij}$ qu'il convient d'appliquer entre les deux codes émis par les stations de base i et j pour obtenir, sur chacun des canaux de réception i et j les coefficients d'autocorrélation et d'intercorrélation tels que représentés sur la figure 5. Ainsi, pour chacun des canaux i et j, le décalage doit être tel que les pics correspondants à l'intercorrélation soient éloignés du pic correspondant à l'autocorrélation.

On cherche à ce que le coefficient d'intercorrélation entre les deux codes d'étalement spectraux, donné par la relation $R_{ij}(\tau) = \int_0^{\Delta T} C_i(t) \times C_j(t + \tau) \times dt$, soit minimal pour tous les retards $\tau$ entre les deux valeurs extrêmes suivantes :

$$\tau_{\min}^i = \delta_{ij} + \min_x\{\delta_j(x, x_j) - \delta_i(x, x_i)\} - \frac{\Delta e}{2}$$

$$\tau_{\max}^i = \delta_{ij} + \max_x\{\delta_j(x, x_j) - \delta_i(x, x_i)\} + \frac{\Delta e}{2}$$

En conséquence, la plage temporelle de retards $\tau$ pour lesquels le coefficient d'intercorrélation doit être minimum sur le canal de réception i est donnée par la relation :

$$\Delta \tau_{ij} = \tau_{\max}^i - \tau_{\min}^i = \max_x\{\delta_j(x, x_j) - \delta_i(x, x_i)\} - \min_x\{\delta_j(x, x_j) - \delta_i(x, x_i)\} + \Delta e$$

Si l'on s'intéresse à présent au traitement du signal sur le canal de réception j, le coefficient d'intercorrélation entre les deux codes d'étalement spectraux doit également être minimal pour tous les retards $\tau$ entre les deux valeurs extrêmes suivantes :

$$\tau_{\min}^{j} = \delta_{ij} + \min_{x}\left\{\delta_i\left(x, x_i\right) - \delta_j\left(x, x_j\right)\right\} - \frac{\Delta e}{2}$$

$$\tau_{\max}^{j} = \delta_{ij} + \max_{x}\left\{\delta_i\left(x, x_i\right) - \delta_j\left(x, x_j\right)\right\} + \frac{\Delta e}{2}$$

Ainsi, la plage temporelle de retards $\tau$ pour lesquels le coefficient d'intercorrélation doit être minimum sur le canal de réception j est donnée par la relation :

$$\Delta\tau_{ji} = \tau_{\max}^{j} - \tau_{\min}^{j} = \max_{x}\left\{\delta_i\left(x, x_i\right) - \delta_j\left(x, x_j\right)\right\} - \min_{x}\left\{\delta_i\left(x, x_i\right) - \delta_j\left(x, x_j\right)\right\} + \Delta e$$

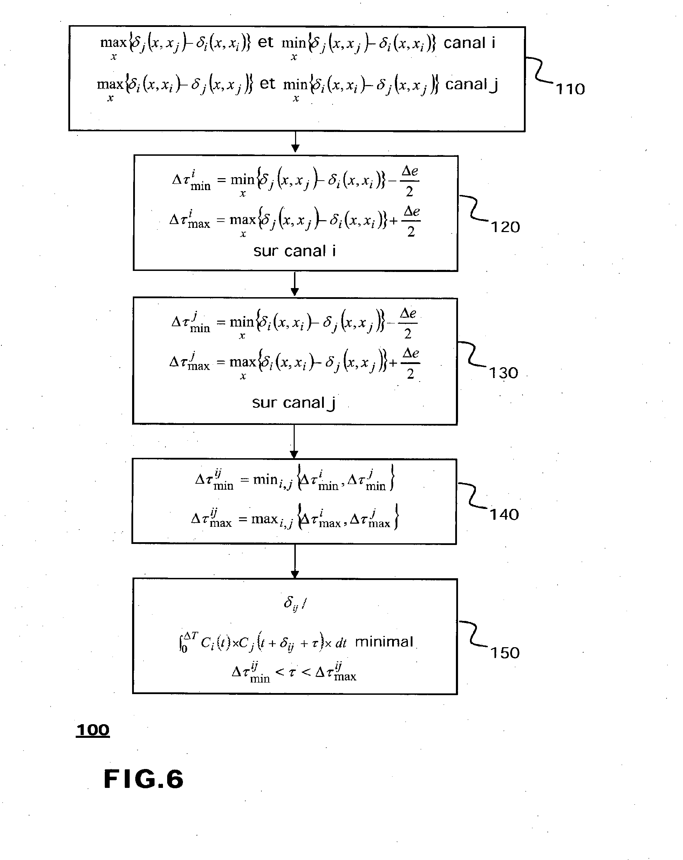

La formulation mathématique précédente permet de définir l'algorithme de traitement permettant, conformément à la présente invention, de dériver les décalages temporels intentionnels $\delta_{ij}$ qu'il convient d'appliquer entre les codes émis par les stations de base pseudolites pour permettre un traitement optimal à la réception par tout récepteur présent dans la zone destinée à être couverte. Les différentes phases de cet algorithme sont représentées schématiquement sur la figure 6:

Pour tout couple de stations de base i et j (avec j>i) dont on connaît les positions $x_i$ et $x_j$, on réalise les étapes suivantes :

- On commence par rechercher la plage de variation restreinte sur laquelle les coefficients d'intercorrélation sur le canal i et sur le canal j devront être minimum, à partir d'estimations des différences minimales et maximales entre les temps de propagation des signaux émis par les stations de base terrestre i et j. Pour ce faire :

    o On recherche les quatre valeurs suivantes (étape 110) : $\max_{x}\left\{\delta_j\left(x, x_j\right) - \delta_i\left(x, x_i\right)\right\}$ et

    $\min_{x}\left\{\delta_j\left(x, x_j\right) - \delta_i\left(x, x_i\right)\right\}$ d'une part, correspondant à la différence maximale, respectivement minimale, entre les temps de propagation des signaux émis par les stations de base i et j, sur le canal de réception i, pour l'ensemble des positions x possibles du récepteur ; $\max_{x}\left\{\delta_i\left(x, x_i\right) - \delta_j\left(x, x_j\right)\right\}$ et

    $\min_{x}\left\{\delta_i\left(x, x_i\right) - \delta_j\left(x, x_j\right)\right\}$ d'autre part, correspondant à la différence maximale, respectivement minimale, entre les temps de propagation des signaux émis par les stations de base i et j, sur le canal de réception j, pour l'ensemble des positions $x$ possibles du récepteur.

    o On calcule ensuite les valeurs suivantes (étapes 120 et 130): $\Delta\tau_{\min}^{i} = \min_{x}\left\{\delta_j\left(x, x_j\right) - \delta_i\left(x, x_i\right)\right\} - \frac{\Delta e}{2}$ et $\Delta\tau_{\max}^{i} = \max_{x}\left\{\delta_j\left(x, x_j\right) - \delta_i\left(x, x_i\right)\right\} + \frac{\Delta e}{2}$

    sur le canal de réception i $\Delta\tau_{\min}^{j} = \min_{x}\left\{\delta_i\left(x, x_i\right) - \delta_j\left(x, x_j\right)\right\} - \frac{\Delta e}{2}$ et

    $\Delta\tau_{\max}^{j} = \max_{x}\left\{\delta_i\left(x, x_i\right) - \delta_j\left(x, x_j\right)\right\} + \frac{\Delta e}{2}$ sur le canal de réception j.

    o On calcule alors les valeurs extrêmes (étape 140) :

$$\Delta\tau_{\min}^{ij} = \min_{i,j}\left\{\Delta\tau_{\min}^{i}, \Delta\tau_{\min}^{j}\right\}$$

$$\Delta\tau_{\max}^{ij} = \max_{i,j}\left\{\Delta\tau_{\max}^{i}, \Delta\tau_{\max}^{j}\right\}$$

A l'issue de l'étape 140, on dispose de la plage de variation restreinte recherchée $\left[\Delta\tau_{\min}^{ij}; \Delta\tau_{\max}^{ij}\right]$.

- On recherche toutes les valeurs de décalage temporel intentionnel $\delta_{ij}$ permettant d'obtenir une intercorrélation minimale pour tous les retards compris dans cette plage restreinte (étape 150). Cela s'exprime mathématiquement par la recherche de

$\delta_{ij}$ tel que $\int_{0}^{\Delta T} C_i(t) \times C_j(t + \delta_{ij} + \tau) \times dt$ minimal pour $\Delta\tau_{\min}^{ij} < \tau < \Delta\tau_{\max}^{ij}$

- A l'issue de toutes ces étapes, on obtient une plage restreinte de retards caractérisée par son centre $\delta_{ij}$ et par ces deux valeurs extrêmes $\Delta\tau_{\min}^{ij}$ et $\Delta\tau_{\max}^{ij}$.

Dans le cas où le système comporte plus de deux stations de base pseudolites, il conviendra de sélectionner les décalages temporels intentionnels entre trois stations de base i, j et k qui respectent en outre la relation suivante $\delta_{ij} = \delta_{ik} + \delta_{kj}$.

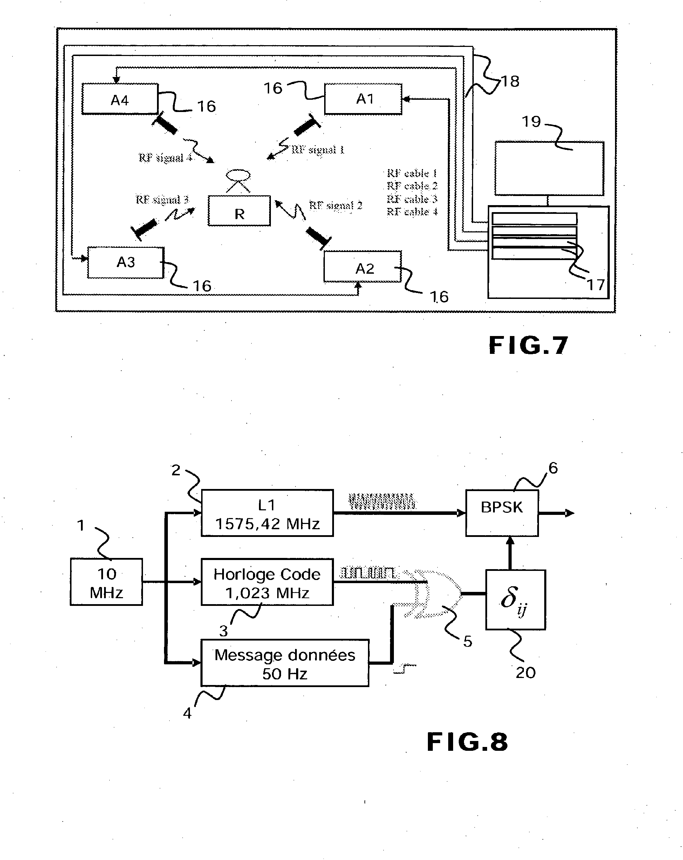

On a représenté, sur la figure 7, une architecture synchrone possible d'un système de localisation selon l'invention comprenant quatre antennes 16 (A1 à A4) d'émission de signaux GPS, chaque antenne étant reliée à un générateur de signal associé 17 par l'intermédiaire d'un câble RF 18, le tout étant piloté en synchronisme par un contrôleur du système 19. Les quatre antennes constituent ici les éléments des stations de base terrestres pseudolites couvrant une zone d'étendue limitée et dont les positions sont connues. La figure 8 illustre quant à elle schématiquement la structure de chaque générateur de signal 17. On retrouve sur cette figure les différents éléments déjà décrits en référence à la figure 1. A la différence de la figure 1, chaque générateur comprend en outre un moyen 20 permettant d'appliquer, si nécessaire, le décalage temporel $\delta_{ij}$ calculé selon le procédé décrit précédemment. On garantit ainsi que tout récepteur R multicanaux classique évoluant à l'intérieur de la zone couverte par le système pourra aisément discriminer les signaux qu'il est susceptible de recevoir simultanément des quatre antennes, et déduire en conséquence les quatre pseudo-distances nécessaires pour dériver sa position.

D'autres architectures sont possibles sans départir du cadre de l'invention : Notamment, la génération des signaux à l'émission n'est pas forcément centralisée. En outre, les signaux n'ont pas besoin d'être complètement synchrones. Un système asynchrone peut également implémenter l'invention, à partir du moment où la désynchronisation reste négligeable par rapport à la longueur des codes.

Grâce à l'invention, on résout à moindre coût le problème de l'effet champ proche/champ lointain dès l'origine, avec peu de moyens logiciels ou hardware à l'émission. Il n'est en particulier pas nécessaire de surdimensionner le système en augmentant le nombre de stations de base terrestres. Il n'est pas non plus nécessaire de tenter d'obtenir des diagrammes d'antennes complexes à l'émission. Le coût total d'un système pseudolite est ainsi optimisé. En outre, aucun traitement particulier n'est nécessaire à la réception, contrairement aux techniques PIC et SIC connues.

La présente invention est applicable à tout système :

- utilisant un nombre N supérieur ou égal à 2 de stations de base pseudolites fixes ou mobiles et au moins un récepteur mobile dans une zone de couverture restreinte ;
- pour lequel il est possible de calculer, pour toutes les positions possibles du récepteur par rapport aux positions des N stations de base pseudolites une différence maximale de temps de propagation entre deux signaux reçus par le récepteur suite à l'émission de n'importe quel couple de stations de base pseudolites,
- dès lors que la durée des codes CDMA émis par les stations de base est plus grande que cette différence maximale, et que la fonction d'intercorrélation entre deux codes CDMA varie en fonction du retard de phase entre ces deux codes.

## Revendications

1. Procédé d'optimisation d'un système de localisation comprenant un nombre N supérieur ou égal à 2 de stations de base émettrices terrestres aptes à être installées à des positions prédéterminées de manière à couvrir une zone terrestre de frontières connues pour permettre à tout récepteur CDMA multicanaux mobile dans ladite zone d'extraire sa position à partir de signaux CDMA qu'il reçoit d'une pluralité desdites stations de base terrestres, **caractérisé**

**en ce qu'**il comporte les étapes suivantes :

- Recherche (110 à 140), pour tout couple de stations de base terrestre i et j de positions prédéterminées respectives $x_i$ et $x_j$, d'une plage temporelle de variation restreinte sur laquelle les coefficients d'intercorrélation sur le canal de réception i et sur le canal de réception j du récepteur devront être minimum, à partir d'estimations des différences minimales et maximales entre les temps de propagation des signaux émis par les stations de base terrestre i et j pour l'ensemble des positions possibles du récepteur ;
- Estimation (150) d'une valeur de décalage temporel intentionnel $\delta_{ij}$ à appliquer à l'émission entre un premier code émis par la station de base i et un deuxième code émis par la station de base j, pour lequel l'intercorrélation entre ledit premier code et ledit deuxième code est minimale pour tous les retards compris dans ladite plage de variation restreinte.

2. Procédé selon la revendication 1, **caractérisé en ce que**, dans le cas où le système de localisation comprend un nombre N supérieur à 2 de stations de base émettrices terrestres, les décalages temporels intentionnels entre trois stations de base terrestres i, j et k sont en outre choisis pour respecter la relation suivante :

$$\delta_{ij} = \delta_{ik} + \delta_{kj}$$

dans laquelle $\delta_{ij}$ est le décalage temporel intentionnel à appliquer entre la station de base terrestre i et la station de base terrestre j ;
$\delta_{ik}$ est le décalage temporel intentionnel à appliquer entre la station de base terrestre i et la station de base terrestre k ;
$\delta_{kj}$ est le décalage temporel intentionnel à appliquer entre la station de base terrestre k et la station de base terrestre j.

3. Système de localisation comprenant un nombre N supérieur ou égal à 2 de stations (16, 17, 18) de base émettrices terrestres installées à des positions prédéterminées de manière à couvrir une zone terrestre de frontières connues pour permettre à un récepteur (R) multicanaux mobile dans ladite zone d'extraire sa position à partir de signaux CDMA qu'il reçoit d'une pluralité desdites stations de base terrestres, chaque station de base émettrice comportant un générateur de signal (17) apte à délivrer un signal à une fréquence porteuse prédéfinie codé par un code CDMA propre à chaque station de base, **caractérisé en ce que** chaque générateur de signal (17) comporte en outre des moyens (20) aptes à appliquer sur le code CDMA. correspondant un décalage temporel intentionnel estimé conformément au procédé selon les revendications 1 et 2.

4. Système de localisation selon la revendication 3, **caractérisé en ce que** le code CDMA propre à chaque station de base est un code de type GPS.

5. Système de localisation selon l'une quelconque des revendications 3 et 4, **caractérisé en ce que** les générateurs de signal de l'ensemble des stations de base terrestres sont synchrones.

6. Système de localisation selon l'une quelconque des revendications 3 à 5, **caractérisé en ce que** les générateurs de signal de l'ensemble des stations de base terrestres sont centralisés.

**Patentansprüche**

1. Verfahren zur Optimierung eines Ortungssystem, umfassend eine Anzahl N größer oder gleich 2 von terrestrischen Basissendestationen die ausgelegt sind, um an vorbestimmten Stellen installiert zu werden, um einen terrestrischen Bereich mit bekannten Grenzen abzudecken, um jedem mobilen Mehrkanal-CDMA-Empfänger in dem Bereich zu ermöglichen, seine Position auf der Grundlage von CDMA-Signalen zu extrahieren, die er von einer Vielzahl der terrestrischen Basisstationen erhält, **dadurch gekennzeichnet, dass** es die folgenden Schritte umfasst:

- Suchen (110 bis 140), für jedes Paar von terrestrischen Basisstationen i und j von entsprechenden vorbestimmten Positionen xi und xj, eines Zeitbereichs mit begrenzter Variation, auf dem die Kreuzkorrelationskoeffizienten auf dem Empfangskanal i und j und auf dem Empfangskanal j des Empfängers minimal sein müssen, ausgehend von Schätzungen der minimalen und maximalen Differenzen zwischen den Laufzeiten der Signal, die von den terrestrischen Basisstationen i und j für die Gesamtheit der möglichen Positionen des Empfängers gesendet werden;

- Schätzen (150) eines beabsichtigten Zeitversetzungswerts ö$_{ij}$, der auf die Sendung zwischen einem ersten Code der von der Basisstation i gesendet wird, und einem zweiten Code, der von der Basisstation j gesendet wird, für den die Interkorrelation zwischen dem ersten Code und dem zweiten Code für alle Verzögerungen minimal ist, die im begrenzten Variationsbereich enthalten sind.

2. Verfahren nach Anspruch 1, **dadurch gekennzeichnet, dass** für den Fall, dass das Ortungssystem umfasst eine Anzahl N größer als 2 von terrestrischen Basissendestationen umfasst, die beabsichtigten Zeitverschiebungen zwischen drei terrestrischen Basisstationen i, j und k außerdem gewählt sind, um die folgende Beziehung zu erfüllen:

$$\delta_{ij} = \delta_{ik} + \delta_{kj}$$

wobei
$\delta_{ij}$ die beabsichtigte Zeitversetzung ist, die zwischen der terrestrischen Basisstation i und der terrestrischen Basisstation j angewendet werden muss;
$\delta_{ik}$ die beabsichtigte Zeitversetzung ist, die zwischen der terrestrischen Basisstation i und der terrestrischen Basisstation k angewendet werden muss;
$\delta_{kj}$ die beabsichtigte Zeitversetzung ist, die zwischen der terrestrischen Basisstation k und der terrestrischen Basisstation j angewendet werden muss.

3. Ortungssystem, umfassend eine Anzahl N größer oder gleich 2 von terrestrischen Basissendestationen (16, 17, 18), die an vorbestimmten Stellen installiert sind, um einen terrestrischen Bereich mit bekannten Grenzen abzudecken, um einem mobilen Mehrkanal-CDMA-Empfänger (R) in dem Bereich zu ermöglichen, seine Position auf der Grundlage von CDMA-Signalen zu extrahieren, die er von einer Vielzahl der terrestrischen Basisstationen erhält, wobei jede Sendebasisstation einen Signalgenerator (17) umfasst, der ausgelegt ist, um ein Signal mit einer vordefinierten Trägerfrequenz zu liefern, das von einem CDMA-Code codiert ist, der jeder Basisstation eigen ist, **dadurch gekennzeichnet, dass** jeder Signalgenerator (17) außerdem Mittel (20) umfasst, die ausgelegt sind, um auf den entsprechenden CDMA-Code eine geschätzte beabsichtigte Zeitversetzung gemäß dem Prozess nach Anspruch 1 und 2 durchzuführen.

4. Ortungssystem nach Anspruch 3, **dadurch gekennzeichnet, dass** der CDMA-Code, der jeder Basisstation eigen ist, ein Code vom Typ GPS ist.

5. Ortungssystem nach einem der Ansprüche 3 und 4, **dadurch gekennzeichnet, dass** die Signalgeneratoren der Gesamtheit der terrestrischen Basisstationen synchron sind.

6. Ortungssystem nach einem der Ansprüche 3 bis 5, **dadurch gekennzeichnet, dass** die Signalgeneratoren der Gesamtheit der terrestrischen Basisstationen zentralisiert sind.

**Claims**

1. A method for optimizing a localization system comprising a number N greater than or equal to 2 of land transmitting base stations able to be installed in predetermined positions so as to cover a land zone with known borders to allow any multichannel CDMA receiver moving in that zone to extract its position from CDMA signals that it receives from a plurality of land-based stations, **characterized in that** it includes the following steps:

- Looking (110 to 140), for any pair of land base stations i and j with respective predetermined positions x$_i$ and x$_j$, for a limited variation time range over which the intercorrelation coefficients on the reception channel i and on the reception channel j of the receiver must be minimal, from estimates of the minimum and maximum differences between the propagation times of the signals emitted by the land base stations i and j for all possible positions of the receiver;
- Estimating (150) an intentional time shift value $\delta_{ij}$ to be applied to the transmission between a first code transmitted by the base station i and a second code transmitted by the base station j, for which the intercorrelation between said first code and said second code is minimal for all of the delays comprised in said limited variation range.

2. The method according to claim 1, **characterized in that**, in the event the localization system comprises a number N greater than 2 of land transmitting base stations, the intentional time shifts between three land base stations i, j and k are further chosen to respect the following relationship:

$$\delta_{ij} = \delta_{ik} + \delta_{kj}$$

wherein

$\delta_{ij}$ is the intentional time shift to be applied between the land base station i and the land base station j;
$\delta_{ik}$ is the intentional time shift to be applied between the land base station i and the land base station k;
$\delta_{kj}$ is the intentional time shift to be applied between the land base station k and the land base station j.

3. A localization system comprising a number N greater than or equal 2 of land transmitting base stations (16, 17, 18) installed in predetermined positions so as to cover a land zone with known borders to allow a multichannel receiver (R) moving within said zone to extract its position from CDMA signals that it receives from a plurality of said land base stations, each transmitting base station including a signal generator (17) able to deliver a signal at a predefined carrier frequency encoded by a CDMA code specific to each base station, **characterized in that** each signal generator (17) further includes means (20) able to apply, on the corresponding CDMA code, an intentional time shift estimated using the method according to claims 1 and 2.

4. The localization system according to claim 3, **characterized in that** the CDMA code specific to each base station is a code of the GPS type.

5. The localization system according to any one of claims 3 and 4, **characterized in that** the signal generators of the set of land base stations are synchronous.

6. The localization system according to any one of claims 3 to 5, **characterized in that** the signal generators of the set of land base stations are centralized.

**FIG.1**
**Art antérieur**

**FIG.2**
**Art antérieur**

## FIG.3
## Art antérieur

intercorrélation PRN1 / PRN2

## FIG.4a

intercorrélation PRN1 / PRN2

**FIG.4b**

**FIG.5**

$$\max_{x}\{\delta_j(x,x_j)-\delta_i(x,x_i)\} \text{ et } \min_{x}\{\delta_j(x,x_j)-\delta_i(x,x_i)\} \text{ canal i}$$

$$\max_{x}\{\delta_i(x,x_i)-\delta_j(x,x_j)\} \text{ et } \min_{x}\{\delta_i(x,x_i)-\delta_j(x,x_j)\} \text{ canal j}$$

110

$$\Delta\tau_{\min}^i = \min_{x}\{\delta_j(x,x_j)-\delta_i(x,x_i)\} - \frac{\Delta e}{2}$$

$$\Delta\tau_{\max}^i = \max_{x}\{\delta_j(x,x_j)-\delta_i(x,x_i)\} + \frac{\Delta e}{2}$$

sur canal i

120

$$\Delta\tau_{\min}^j = \min_{x}\{\delta_i(x,x_i)-\delta_j(x,x_j)\} - \frac{\Delta e}{2}$$

$$\Delta\tau_{\max}^j = \max_{x}\{\delta_i(x,x_i)-\delta_j(x,x_j)\} + \frac{\Delta e}{2}$$

sur canal j

130

$$\Delta\tau_{\min}^{ij} = \min_{i,j}\{\Delta\tau_{\min}^i, \Delta\tau_{\min}^j\}$$

$$\Delta\tau_{\max}^{ij} = \max_{i,j}\{\Delta\tau_{\max}^i, \Delta\tau_{\max}^j\}$$

140

$$\delta_{ij} /$$

$$\int_0^{\Delta T} C_i(t) \times C_j(t + \delta_{ij} + \tau) \times dt \text{ minimal}$$

$$\Delta\tau_{\min}^{ij} < \tau < \Delta\tau_{\max}^{ij}$$

150

**100**

# FIG.6

**FIG.7**

**FIG.8**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5363403 A

**Littérature non-brevet citée dans la description**

- **PULIN PATEL ; JACK HOLTZMAN.** Analysis of a Simple Successive Interference cancellation Scheme in a D/CDMA System. *IEEE Journal on selected areas in communications,* Juin 1994, vol. 12 (5